# EUROPÄISCHE PATENTANMELDUNG

(11) **EP 1 925 598 A1**
(43) Veröffentlichungstag der Anmeldung: **28.05.2008**
(21) Anmeldenummer: 06024475.3
(22) Anmeldetag: 25.11.2006
(51) Int. Cl.: C02F 3/30, C02F 1/00, B01D 24/12, C02F 101/10, C02F 101/16

(54) **Vertikal-Horizontal-Filteranlage zur biologischen Reinigung von Schmutzwässern**

(71) Anmelder: Böttcher, Joachim, 67822 Hengstbacherhof (DE)
(72) Erfinder: Böttcher, Joachim, 67822 Hengstbacherhof (DE)
(74) Vertreter: Patentanwälte Möll und Bitterich

(57) **Zusammenfassung**

Die vorliegende Erfindung betrifft eine Vertikal-Horizontal-Filteranlage zur biologischen Reinigung von Schmutzwässern, bestehend aus einer oberen Zone aus einem mit Pflanzen bewachsenen Erdreich-Beet mit Zuführungen für das Schmutzwasser und darunter angeordneter Sandschicht mit einer unteren Filterzone aus Kies und mindestens einer Entnahmestelle für das gereinigte Wasser,wobei zwischen der oberen und unteren Filterzone eine Sperrschicht mit Durchbrechungen angeordnet ist unddie Filteranlage an ihren Seiten und am Boden gegen das Erdreich abgedichtet ist,wobei die Durchbrechungen der Sperrschicht an deren Rand angeordnet sind und/oder die Sperrschicht nicht vollständig an die Beetrandzone heranreicht
dadurch gekennzeichnet,
dass die obere Zone als aerob wirkende Reinigungszone und die untere Zone als anaerob wirkende Reinigungszone ausgebildet ist.

## Beschreibung

Gegenstand vorliegender Erfindung ist eine erweiterte Vertikal-Horizontal-Filteranlage zur biologischen Reinigung von Schmutzwässern.

Zum nächstkommenden Stand der Technik ist die Deutsche Patentschrift DE 197 37 690 zu nennen, die eine biologische Vertikal-Horizontal-Filteranlage zur Reinigung von Abwässern beschreibt, bestehend aus einer oberen Filterzone aus einem mit Pflanzen bewachsenen Erdreich-Beet mit Zuführungen für das Abwasser und darunter angeordneter Sandschicht und einer unteren Filterzone aus Kies und mindestens einer Entnahmestelle für das gereinigte Wasser, wobei zwischen der oberen und unteren Filterzone eine Sperrschicht mit Durchbrechungen angeordnet ist und die Filteranlage an ihren Seiten und am Boden gegen das Erdreich abgedichtet ist, wobei die Durchbrechungen der Sperrschicht an deren Rand angeordnet sind und/oder die Sperrschicht nicht vollständig an die Beetrandzone heranreicht.

Es hat sich überraschenderweise gezeigt, dass die Denitrifikationsleistung der Anlage des nächstkommenden Standes der Technik sprunghaft verbessert werden kann; dies ist Gegenstand vorliegender Erfindung. Die Erfindung vermittelt die technische Lehre, dass die obere Zone als aerob wirkende und die untere Zone als anaerob wirkende Reinigungszone ausgebildet ist.

Das in der oberen Filterzone biologisch gereinigte Abwasser gelangt entweder durch Unterbrechungen der Sperrschicht, die vorzugsweise an den Rändern der Anlage angeordnet sind, in die untere Filterzone. Durch Rohrleitungen oder ähnliche Einrichtungen wird nicht biologisch behandeltes Abwasser, beispielsweise aus der Zulaufeinrichtung der oberen Filterzone, direkt in die untere Filterzone befördert. Die Fördermenge kann z.B. mit einem Schieber reguliert werden.

In der unteren Filterzone kommt es nun zu einer Vermischung des in der oberen Zone biologisch behandelten, nitrifizierten Abwassers mit dem nicht biologisch behandelten Abwasser, wodurch den denitrifizierenden Mikroorganismen organischer Kohlenstoff zur Verfügung steht und gleichfalls eine Denitrifikation ermöglicht wird. Dies ist die erste Ausführungsform.

Es folgt die Schilderung der zweiten Ausführungsform:
Der gleiche Verfahrensablauf wird auch dann ermöglicht, wenn die Sperrschicht zwischen den Zonen innerhalb der Anlage keine Durchbrechungen aufweist. In diesem Fall kann das in der oberen Zone biologisch behandelte Abwasser über Entnahmevorrichtungen in ein separat angeordnetes Behältnis (Behälter, Schacht, Becken o.ä.) geleitet werden. An dieser Stelle kann nun biologisch unbehandeltes Abwasser bzw. Abwasser, welches noch über eine für die Denitrifikation ausreichende Menge an organischen Kohlenstoffverbindungen verfügt, zudosiert werden.

Es wird das auf diese Weise vermischte Abwasser in die untere Filterzone eingebracht, woselbst die Denitrifikation unter anaeroben Bedingungen abläuft.

Die dritte Ausführungsform ist dadurch charakterisiert, dass anstelle von biologisch unbehandelten Abwasser, bzw. Abwasser, welches noch über eine für die Denitrifikation ausreichende Menge an organischen Kohlenstoffverbindungen verfügt, eine andere Kohlenstoffquelle zudosiert wird, wie beispielsweise Methanolsäure, Essigsäure o.ä. Auch können weitere organische Substanzen zudosiert werden, die bei Verarbeitungsprozessen o.ä. entstehen, wie beispielsweise Schmutzwasser aus der Kompostherstellung, Presswasser aus der Biovergärung, Gärrückstände, Schmutzwässer aus der Wein- und Obstaufbereitung, Brennereien, Tierhaltung usw.

Die vierte Ausführungsform sieht eine Vorrichtung im Ablauf des Verfahrens vor, die für abwechselnde und unterschiedliche Milieubedingungen in beiden Filterzonen sorgt. Bei der Vorrichtung kann es sich um ein mechanisches Ventil, eine Pumpe o.ä. handeln, welche den Ablauf aus der Anlage zunächst geschlossen hält, bis ein gewünschtes Einstauziel von unten nach oben erreicht ist. Dabei kann die untere Filterzone vollständig oder auch nur teilweise oder auch überhaupt nicht eingestaut werden. Wenn das gewünschte Einstauziel erreicht ist, öffnet sich die Vorrichtung im Ablauf der Anlage bzw. die Pumpe fördert das aufgestaute Abwasser aus der Anlage. Nach der Entleerung einer gewünschten Menge Abwasser schließt die Vorrichtung im Ablauf bzw. schaltet die Pumpe ab. Nun beginnt der Einstauprozess wieder von vorne.

Durch diesen wechselnden Einstaubetrieb werden in den verschiedenen Zonen abwechselnde und unterschiedliche Milieubedingungen erreicht, die insgesamt dazu führen, dass alle erwünschten biologischen Abbauprozesse in der Anlage erreicht werden. Der Prozess des biologischen Abbaus der organischen Frachten sowie eine Nitrifikationsleistung wird vorwiegend in der uneingestauten, aeroben Phase erzielt, weil Luftsauerstoff in die Filterporen gelangen kann. Eine Denitrifikation wird vorwiegend in der aufgestauten Phase erreicht, weil hier vorwiegend anaerobe Bedingungen herrschen und dadurch einerseits das zulaufende ungereinigte Abwasser nicht mehr ausreichend aerob abgebaut wird und andererseits gute Bedingungen für die Denitrifikation vorherrschen. Ein ständiger, automatischer Wechsel der Milieubedingungen innerhalb der Filterzonen, welche durch die Einstellung der Ablaufvorrichtung erreicht wird, ist notwendig, um insgesamt für gute Abbauleistungen für die organischen Schmutzfrachten sowie die Stickstofffrachten zu erzielen.

Bei der optionalen Anwendung dieser vierten Ausführungsform kann auf eine Sperrschicht zwischen den Filterzonen verzichtet werden, was aber nicht zwingend ist.

Die fünfte Ausführungsform ist für die gezielte Rückhaltung von Phosphatverbindungen vorgesehen. Sie kann dort eingesetzt werden, wo Anforderungen an die Ablaufqualität des gereinigten Abwassers auch den Parameter Phosphat einbeziehen.

Phosphatrückhalt in bewachsenen Bodenfiltern ist je nach physikalischer und chemischer Zusammensetzung des eingesetzten Filtermaterials sehr unterschiedlich. Wird beispielsweise ein eisen- und/oder kalkhaltiges Filtersubstrat eingesetzt, so ist die Aufnahme- und Anlagerungskapazität von Phosphorverbindungen höher anzusetzen, als das bei Substraten mit geringen Eisen- oder Kalkgehalten der Fall ist.

Aber auch eisen- und kalkhaltige Substrate können nach einigen Jahren ihre Aufnahme- und Anlagerungskapazität von Phosphorverbindungen verringern bzw. sogar gänzlich verlieren.

Um diesem Effekt vorzubeugen, sieht die fünfte Ausführungsform folgende zwei Varianten vor.

Schilderung der ersten Variante:
Wenn die Phosphorbindekapazität im Bodenfilter nachlässt, können beispielsweise Eisenspäne, eisenhaltige Stoffe, Gesteine o.ä. oder kalkhaltige Stoffe, Gesteine oder Flüssigkeiten in die Filterzonen eingebracht werden. Diese sorgen für einen bestimmten Zeitraum für eine Verbesserung der Phosphatanlagerungskapazität. Wenn diese wiederum nachlässt, kann die Einbringung der o.g. Stoffe wiederholt werden.

Schilderung der zweiten Variante:
Phosphor ist ein wertvoller Pflanzennährstoff, der in der Natur nur in begrenzten Mengen vorkommt und somit für die Versorgung der Pflanzen auf der Erde eine durchaus limitierte natürlich Ressource darstellt. Vor diesem Hintergrund ist es als fragwürdig bzw. nicht nachhaltig einzustufen, dass in den meisten bekannten Abwasserbehandlungsverfahren, welche Anforderungen an Phosphatablaufwerte zu erfüllen haben, dieser wertvolle und in seinem Vorkommen äußerst begrenzte Pflanzennährstoff durch Zugabe von Chemikalien o.ä. Verfahren für immer kontaminiert bzw. unbrauchbar gemacht wird.

Bei dieser Ausführungsform handelt es sich um eine Vorrichtung für Phosphatrückhaltung, welche in der Regel, nach einem bewachsenen Bodenfilter eingesetzt werden kann. Dabei wird das biologisch behandelte Abwasser über einen Filterkörper geleitet, der Elemente mit einer hohen Phosphorbindekapazität enthält. Dieser Filterkörper kann aus eisenhaltigen, kalkhaltigen oder vergleichbaren mineralischen Bestandteilen bestehen. Der Filterkörper befindet sich in einem abgedichteten Behälter, Schacht, Becken oder ähnlichem, welcher an der Sohle eine Entnahme bzw. Auslaufvorrichtung aufweist.

Wenn die Phosphatbindekapazität aufgrund der bereits erfolgten Phosphatanlagerung nach einem Zeitraum nachlässt, kann das Material als Phosphatdünger unter Einhaltung der gesetzlichen Anforderungen in Gärten, Gartenbau und Landwirtschaft eingesetzt werden.

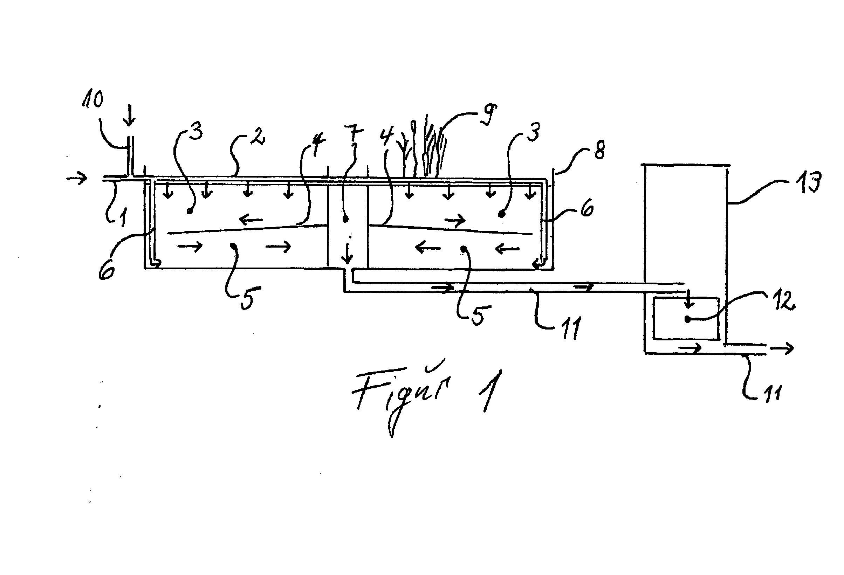

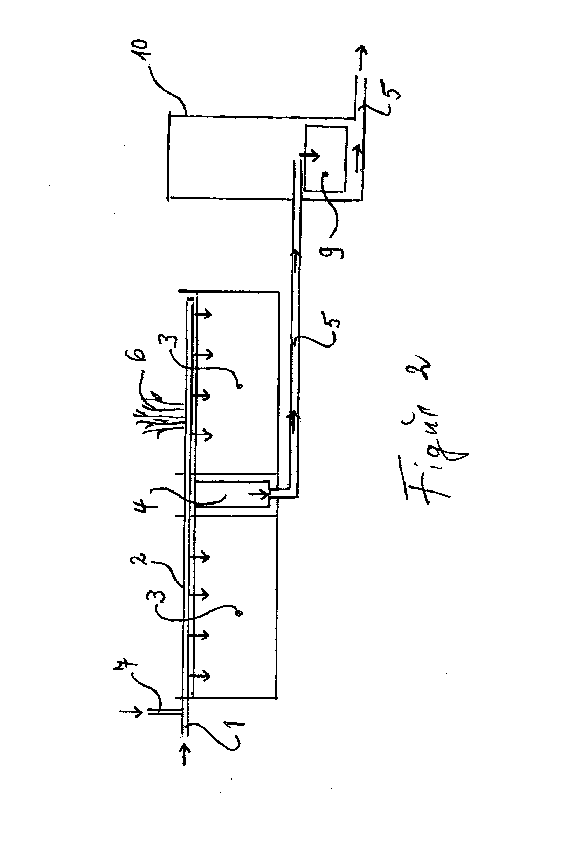

Der Gegenstand vorliegender Erfindung wird in beiliegenden Figuren 1 + 2, die bevorzugte Ausführungsformen darstellen, weiterhin erläutert.
Figur 1 (erste, zweite und dritte Ausführungsform)
   - Zulauf (1)
   - Verteilersystem (2)
   - Obere Filterzone (3)
   - Sperrschicht mit Unterrechungen an den Rändern (4)
   - Untere Filterzone (5)
   - Vorrichtung zur Einleitung von nicht biologisch behandeltem Schmutzwasser in die untere Filterzone (6)
   - Vorrichtung zur Sammlung und Abführung von gereinigtem Schmutzwasser (7)
   - Abdichtung (8)
   - Pflanzen (9)
   - Vorrichtung zur Zudosierung von Stoffen zur Verbesserung der Phosphatbindekapazität (10) (1. Methode)
   - Ablauf (11)
   - Vorrichtung zur Phosphatrückhaltung (12) (2. Methode) Behälter, Schacht, Becken o.ä. (13)
Figur 2 (vierte Ausführungsform)
   - Zulauf (1)
   - Verteilersystem (2)
   - Filterzone (3)
   - Vorrichtung für abwechselnde und unterschiedliche Milieubedingungen in der Filterzone (4)
   - Ablauf (5)
   - Pflanzen (6)
   - Vorrichtung zur Zudosierung von Stoffen zur Verbesserung der Phosphatbindekapazität (7) (1. Methode)
   - Abdichtung (8)
   - Vorrichtung zur Phosphatrückhaltung (9) (2. Methode Behälter, Schacht, Becken o.a. (10)

Mit vorliegender Erfindung wird ein Bündel von Vorteilen erreicht, insbesondere eine sprunghafte Verbesserung der Denitrifikationsleistung und/oder der Phosphatrückhaltung und/oder der Phosphateliminierung.

## Patentansprüche

1. Vertikal-Horizontal-Filteranlage zur biologischen Reinigung von Schmutzwässer, bestehend aus einer oberen Zone aus einem mit Pflanzen bewachsenen Erdreich-Beet mit Zuführungen für das Schmutzwasser und darunter angeordneter Sandschicht mit einer unteren Filterzone aus Kies und mindestens einer Entnahmestelle für das gereinigte Wasser,wobei zwischen der oberen und unteren Filterzone eine Sperrschicht mit Durchbrechungen angeordnet ist und die Filteranlage an ihren Seiten und am Boden gegen das Erdreich abgedichtet ist,wobei die Durchbrechungen der Sperrschicht an deren Rand angeordnet sind und/oder die Sperrschicht nicht vollständig an die Beetrandzone heranreicht
**dadurch gekennzeichnet,**
**dass** die obere Zone als aerob wirkende Reinigungszone und die untere Zone als anaerob wirkende Reinigungszone ausgebildet ist.

2. Filteranlage nach Anspruch 1,
**dadurch gekennzeichnet,**
**dass** in der oberen Zone eine Vorrichtung zur Einleitung von nicht biologisch behandeltem Schmutzwasser in die untere Filterzone,angeordnet ist.

3. Filteranlage nach Anspruch 1 - 2,
**dadurch gekennzeichnet,dass** in der oberen Zone eine Vorrichtung zur Zugabe von kohlenstoffhaltigen Stoffen angeordnet ist.

4. Filteranlage nach Anspruch 1 - 3,
**dadurch gekennzeichnet,**
**dass** in der oberen und/unteren Zone Einstauregulatoren angeordnet sind.

5. Filteranlage nach Anspruch 1 - 4,
**dadurch gekennzeichnet,**
**dass** in ihr Filterkörper mit hoher Phosphorbindekapazität angeordnet sind.
